# EUROPÄISCHE PATENTSCHRIFT

(11) **EP 0 293 874 B1**
(45) Veröffentlichungstag und Bekanntmachung des Hinweises auf die Patenterteilung: **29.12.1993**
(21) Anmeldenummer: 88108808.2
(22) Anmeldetag: 01.06.1988
(51) Int. Cl.: H02M 3/337

(54) **Verfahren und Schaltungsanordnung zur Zustandssteuerung für einen Schwingkreis in einem Resonanzwandler-Netzteil**
Method and circuit arrangement to control the state of a resonant converter
Procédé et dispositif pour commander l'état d'un circuit résonnant dans une alimentation à circuit oscillant

(30) Priorität: 05.06.1987 DE 3718960; 22.04.1988 DE 3813673
(43) Veröffentlichungstag der Anmeldung: 07.12.1988
(73) Patentinhaber: Siemens Nixdorf Informationssysteme Aktiengesellschaft, 33102 Paderborn (DE)
(72) Erfinder: Hielscher, Edwin, Dipl.-Ing., D-6370 Oberursel Stierstadt (DE); Loges, Werner, Dipl.-Ing., D-6457 Maintal 3 (DE); Schlenk, Manfred, Dipl.-Ing., D-8900 Augsburg (DE); Rettenmaier, Helmut, Dipl.-Ing., D-8934 Grossaitingen (DE)
(74) Vertreter: Fuchs, Franz-Josef, Dr.-Ing.

(56) Entgegenhaltungen:
- GB-A- 2 057 168
- GB-A- 2 170 663
- US-A- 3 596 165
- ELECTRO, 23 April 1985, NEW YORK, US ; Seiten 1-4; P.J. CARLSON: "A duty cycle controlled series resonnant converter"
- R. Patel and R. Adair, "High Frequency Resonant Power Supply - Design Review", Unitrode Power Supply Design Seminar, Unitrode Publication No. SEM-300, 1986

## Beschreibung

Die Erfindung betrifft ein Verfahren und eine Schaltungsanordnung gemaß dem Oberbegriff des Patentanspruches 1 zur Zustandssteuerung für einen jeweils nacheinander einen Lade- und einen Entladezustand einnehmenden Schwingkreis , der in einem nach dem Prinzip eines Resonanzwwandlers ausgebildeten Netzteil den Primärstromkreis eines Übertragers bildet, dessen sekundärseitige Ausgangsspannung von einer Regeleinrichtung überwacht wird, die den Beginn jedes Ladezustandes in Abhängigkeit der Höhe der sekundärseitigen Ausgangsspannung einleitet.

Elektronische Geräte wurden in den vergangenen Jahren trotz zunehmender Komplexität ständig kleiner, kompakter und leichter. Diese Entwicklung beruht weitgehend auf dem fortschreitenden Einsatz integrierter Schaltungen. Lediglich das Netzteil blieb von dieser Entwicklung ausgeschlossen, da sich bei dem herkömmlichen Längsreglerprinzip Volumen und Gewicht nur in sehr geringem Maße reduzieren lassen.

Wesentliche Fortschritte in dieser Hinsicht konnten erst durch die Ausführung des Netzteils als Schaltnetzteil erzielt werden. Durch die Entwicklung neuer Bauelemente, insbesondere schnell schaltender Transistoren ist es heute möglich, Schaltnetzteile mit hoher Zuverlässigkeit und wirtschaftlichem Vorteil zu bauen. Sie sind nicht nur kleiner und leichter, sondern haben auch einen höheren Wirkungsgrad als konventionelle Netzteile.

Das Prinzip der Schaltnetzteile beruht im wesentlichen darauf, eine Eingangsgleichspannung mit Hilfe eines schnellen Schalters zu zerhacken, die dadurch gewonnene Rechteckspannung durch eine Übertrager zu transformieren und dessen Ausgangsspannung wieder gleichzurichten. Mit Hilfe einer Regelung, die entweder das Tastverhältnis oder die Frequenz des Schaltvorgangs beeinflußt, wird die Ausgangsspannung stabilisiert.

Wie aus der Literatur "Schaltnetzteile" von Joachim Wüstehube und anderen, expert Verlag 1979, bekannt ist, arbeiten derartige Gleichspannungswandler ihrem Funktionsprinzip nach, entweder als Sperrwandler, Durchflußwandler oder Gegentaktwandler.

Die mit diesen Wandlern erzielbare Ausgangsleistung wird hauptsächlich nur durch die Belastbarkeit der Schalttransistoren begrenzt.

Volumen und Gewicht eines Schaltnetzteils bestimmen jedoch im wesentlichen dessen induktive Bauelemente, die somit für die Leistungsdichte, d.h. für das Verhältnis zwischen der maximal abgebbaren Leistung und der Baugröße oder dem Gewicht des Netzteils relevant sind.

Will man die Leistungsdichte vergrößern, so ist es unumgänglich, die Baugrößen der Induktivitäten zu verringern und dabei deren Wirkungsgrad zu erhalten. Dies ist aber nur durch Erhöhen der Schaltfrequenz zu erreichen.

Sehr schnell muß man erkennen, daß die alleinige Erhöhung der Schaltfrequenz auf über ca. 80 KHz eine spürbare Wirkungsgradverminderung in einem Schaltnetzteil mit sich bringt. Die Gründe dafür sind die sehr hohen Anstiegsgeschwindigkeiten der Ströme und Spannungen in nach herkömmlichen Prinzipien arbeitenden Schaltnetzteilen. Auch wirken sich bei höheren Frequenzen parasitäre Effekte wie der Skin-Effekt aus.

Weitere, zur Minderung des Wirkungsgrades beitragende Verluste treten auf der Sekundärseite des Übertragers durch Gleichrichterelemente auf. Bedingt durch deren große Sperrverzugsladungen und hohe Rückströme bei schnellen Spannungs- und Stromänderungen entstehen zusätzliche Verluste.

Ungeachtet der sich bei höheren Frequenzen einstellenden Verlustleistungen erzeugen hochfrequente und schnelle Strom- und Spannungsänderungen immense Funkstörungen, die nur mit aufwendigen Filtern auf ein vernünftiges Maß zu reduzieren sind.

Die Tatsache, daß die auftretenden schnellen Spannungs- und Stromänderungen in herkömmlichen Schaltnetzteilen einer Erhöhung der Schaltfrequenz Grenzen auferlegen, führte zu einem neuen Prinzip von Gleichspannungswandlern, den sogenannten Resonanzwandlern.

In der Veröffentlichung der Firma Unitrode, R. Patel and R. Adair, "High Frequency Series Resonant Power Supply -- Design Review," Unitrode Power Supply Design Seminar, Unitrode Publication no. SEM-300, Topic #5, wird ein Netzteil mit einem Serienresonanzwandler vorgestellt. Der in dieser Anordnung realisierte Grundgedanke besteht darin, den Primärstromkreis des verwendeten Übertragers als LC-Schwingkreis auszubilden. Dieser wird bei Bedarf für ein bestimmtes Zeitintervall geladen und für dasselbe Zeitintervall anschließend entladen, wobei die Zeitintervalle den verwendeten Bauteilen spezifisch so angepaßt sind, daß für den Serienschwingkreis bei Nennbelastung des Sekundärstromkreises die Resonanzbedingung erfüllt ist.

Bekanntlich ist bei Resonanz im Serienschwingkreis der komplexe Widerstand, d.h. der Blindwiderstand des Stromkreises, gleich Null. Der Strom, auch Resonanzstrom genannt, ist mit der Spannung am Schwingkreis in Phase, und seine Amplitude erreicht ihren maximalen Wert, der nur durch den Wirkwiderstand des Serienschwingkreises begrenzt ist.

Bei näherem Eingehen auf die Vorgänge beim Laden des Schwingkreises erkennt man, daß sich der Stromverlauf durch eine Sinushalbwelle darstellen läßt, an die sich beim Entladen des Schwingkreises eine zweite Sinushalbwelle mit entgegengesetzter Polarität anschließt, wodurch eine vollständige Sinuswelle des Stromes entsteht.

Näheres Wissen über derartige Ausgleichsvorgänge und deren Berechnungen sind der einschlägigen Literatur, z.B. E.Phillippow, Taschenbuch "Elektrotechnik", Band 1 Grundlagen, 1968, zu entnehmen.

Durch die Verwendung eines in Resonanz betriebenen Serienschwingkreises werden folglich schnelle Stromänderungen im Schaltnetzteil vermieden.

Betrachtet man nun mit der Kenntnis um das Prinzip eines Serienresonanzwandlers die gezeigte Schaltungsanordnung aus der oben erwähnten Veröffentlichung der Firma Unitrode, so sieht man, daß sich die wirksame Induktivität des Serienschwingkreises aus der primärseitigen Induktivität des Übertragers und der Induktivität einer Drossel zusammensetzt. Diese Anordnung wurde gewählt, um den Einfluß der von der Belastung des Sekundärkreises abhängigen Induktivität des Übertragers auf die wirksame Induktivität des Serienschwingkreises möglichst gering zu halten. Zu diesem Zweck muß die Induktivität der Drossel gegenüber der des Übertragers möglichst groß sein. Dem entgegen steht aber die Tatsache, daß die Hintereinanderschaltung der Drossel und des Übertragers einem induktiven Spannungsteiler gleichkommt, der die am Übertrager zur Verfügung stehende Spannung stromabhängig macht und Wirkungsgradeinbußen durch in der Drossel entstehende Magnetisierungsverluste fördert.

Da die Induktivität der Drossel aus obengenannten Gründen nicht beliebig vergrößert werden kann, stimmt die Eigenfrequenz mit der konstanten Ansteuerfrequenz in einem derartig ausgebildeten Schwingkreis tatsächlich nur in einem engen Bereich der sekundärseitigen Belastung des Übertragers überein. Wird dieser üblicherweise als Nennlastbereich ausgelegte enge Bereich verlassen, entstehen unsymmetrische Überspannungen an den Energiespeichern und dadurch Überspannungen an den Schaltelementen. Um diese zu schützen, muß mittels Dioden die Spannung am Kondensator des Schwingkreises begrenzt werden, an denen dann wiederum ein Teil der übertragbaren Leistung verlorengeht. Außerdem kommt es außerhalb des Resonanzpunktes zu Abrissen des Resonanzstromes, wodurch an den Schaltelementen hohe Verluste entstehen.

Aufgabe der Erfindung ist es daher, einen Resonanzwandler für Netzteile so weiterzubilden, daß die Resonanzbedingung ohne Wirkungsgradverluste auch bei sekundärseitigen Belastungsänderungen erfüllt ist.

Gelöst wird die Aufgabe erfindungsgemäß durch die im kennzeichnenden Teil des Patentanspruchs 1 angegebenen Merkmale.

Mit diesem Verfahren wird das Strom- und/oder Spannungsverhalten im Schwingkreis überwacht und anhand daraus gewonnener Informationen die Ansteuerfrequenz kontinuierlich an die sich verändernde Eigenfrequenz angepaßt. Die Resonanzbedingung im Schwingkreis bleibt deshalb stets erhalten und Wirkungsgradverluste durch Abreißen des Resonanzstromes oder durch Überspannungen werden vermieden.

Zudem kann mit diesem Verfahren eine Drossel für den Schwingkreis eingespart werden, wodurch zusätzlich eine Reduzierung von Wirkungsgradverlusten möglich ist.

Da die Resonanzbedingung stets erfüllt ist, können die Schaltelemente, da sie immer bei Nulldurchgang des Resonanzstromes schalten, für geringe Leistung ausgelegt sein. Schutzmaßnahmen gegen Überspannungen an des Schaltelementen sind überflüssig geworden.

Ausgehend von diesem allgemeinen Lösungsprinzip wird bei der Variante gemäß Patentanspruch 2 die Ansteuerfrequenz mit der Eigenfrequenz des Schwingkreises abhängig von den Stromnulldurchgängen des Resonanzstromes synchronisiert. Eine Abweichung der Ansteuerfrequenz von der Eigenfrequenz ist zu jedem Zeitpunkt minimal und wird nur durch die Verzögerungszeit von der Erkennung eines Stromnulldurchgangs bis zum Umschalten der Schaltelemente bestimmt.

Bei der Lösungsvariante gemäß Patentanspruch 3 wird anstelle der direkten Steuerung ein Regelkreis verwendet, der anhand von sich verändernden Stromwerten die Ansteuerfrequenz entsprechend nachführt.

Bei der Lösungsvariante nach Anspruch 4 wird anstelle einer Vollwelle zunächst nur eine Halbwelle erzeugt und unmittelbar anschließend daran eine lastabhängige Pause eingelegt, der wiederum eine zweite Halbwelle, eine zweite lastabhängige Pause, und so weiter folgen. Der Speicherkondensator wird demzufolge nur mit ca. der Hälfte der bei einer Vollwelle auftretenden Ladungsmenge beaufschlagt. Da zwischen de Halbwellen jeweils eine ausreichend große Pause auftritt, sind die für den jeweiligen Schaltzustand in der Lade- bzw. Entladephase zuständigen Schalttransistoren nie gleichzeitig leitend, was wiederum deren Ansteuerlogik vereinfacht, weil es nun nicht mehr so sehr darauf ankommt, daß der erste Schalttransistor möglichst schnell sperrt, bevor der zweite Schalttransistor leitend gesteuert wird.

Vorteilhafte Schaltungsanordnungen zur Durchführung der Verfahren nach Anspruch 2 und 3 sind in den Unteransprüchen 5 bis 13 angegeben.

Ausführungsbeispiele der Erfindung werden im folgenden anhand der Zeichnung näher erläutert.
Dabei zeigen:
- FIG 1: eine Schaltungsanordnung für die Leistungsstufe eines Netzteils mit Resonanzwandler nach dem Stand der Technik
- FIG 2: eine Anordnung für eine Regelschaltung mit Stromnulldurchgangserkennung
- FIG 3: eine Schaltungsanordnung der Leistungsstufe eines Netzteils mit Resonanzwandler
- FIG 4: eine Übersicht der im Schwingkreis bei Eigenfrequenz auftretenden Strom- und Spannungswerte in Abhängigkeit der Zeit
- FIG 5: eine Schaltungsanordnung für eine Regelschaltung zur Erkennung des maximalen Stromes
- FIG 6: das Prinzipschaltbild eines Netzteils mit Resonanzwandler
- FIG 7: Impulsdiagramme und Stromverläufe bei einer Regelung nach dem Vollwellenprinzip
- FIG 8: Impulsdiagramme und Stromverläufe bei einer Regelung nach dem Halbwellenprinzip

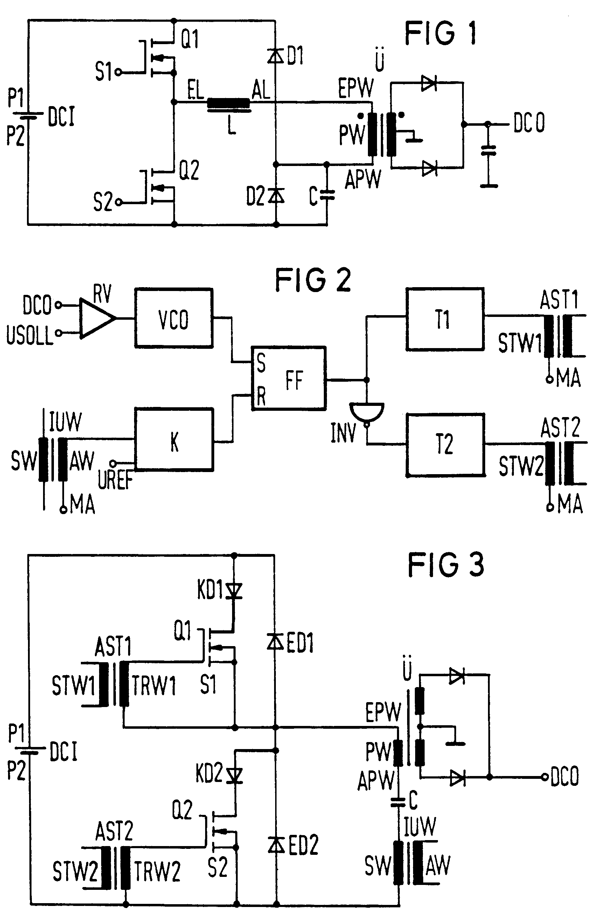

In der FIG 1 ist eine Schaltungsanordnung für eine Leistungsstufe eines Netzteils mit Resonanzwandler, wie sie der Stand der Technik kennt, dargestellt. Ein erster und ein zweiter Schalttransistor Q1, Q2 sind einem Stromkreis, bestehend aus einer Drossel L, einer Primärwicklung PW eines Überträgers Ü und einem Kondensator C zugeordnet. Ein Eingang EL der Drossel L ist über den ersten Schalttransistor Q1 an einen positiven Pol P1 und über de zweiten Schalttransistor Q2 an einen negativen Pol P2 einer Gleichspannungsquelle DCI angeschlossen. Der andere Ausgang AL der Drossel L ist an einen Eingang EPW der Primärwicklung PW des Übertragers Ü geführt, deren anderer Ausgang APW sowohl über den Kondensator C mit dem negativen Pol P2 der Gleichspannungsquelle DCI verbunden ist, als auch über zwei jeweils in Sperrichtung betriebene Schutzdioden D1, D2 an die beiden Pole P1 und P2 der Gleichspannungsquelle DCI angeschlossen ist. Sekundärseitig weist der Übertrager Ü eine übliche Gleichrichterbeschaltung für Zweiwegegleichrichtung auf, der die Ausgangsgleichspannung DCO entnehmbar ist.

Eine in der FIG 1 nicht dargestellte, die Ausgangsgleichspannung DCO überwachende Regeleinheit ist mit den Steuereingängen S1, S2 der beiden Schalttransistoren Q1, Q2 verbunden, die in Ruhelage ihren Sperrzustand einnehmen.

Erkennt die Regeleinheit einen Abfall der Ausgangsgleichspannung DCO unterhalb eines Sollwertes, so beaufschlagt sie zuerst den Steuereingang S1 des ersten Schalttransistors Q1 und unmittelbar danach den Steuereingang S2 des zweiten Schalttransistors Q2 mit jeweils einem Impuls. Diese Art der Ansteuerung wiederholt sich solange bis die Ausgangsgleichspannung DCO den Sollwert erreicht hat. Alle Impulse der Regelschaltung weisen die gleiche zeitliche Länge auf, die so bemessen ist, daß für eine bestimmte sekundärseitige Belastung des Übertragers Ü in der Reihenschaltung aus Drossel L, Primärwicklung PW des Übertragers Ü und Kondensator C die Resonanzbedingung erfüllt ist.

In der FIG 2 ist ein Blockschaltbild einer erfindungsgemäßen Regelschaltung mit Stromnulldurchgangserkennung dargestellt. Sie besteht aus einem RS-Flip-Flop FF, dem eingangsseitig ein spannungsgesteuerter Oszillator VCO mit vorgeschaltetem Regelverstärker RV und ein Komparator K mit vorgeschaltetem Stromspannungswandler IUW zugeordnet ist. Ausgangsseitig weist diese Regelschaltung zwei Treiberstufen T1, T2 mit nachgeschalteten Ansteuerübertragern AST1, AST2 auf.

Der spannungsgesteuerte Oszillator VCO ist eingangsseitig mit dem Ausgang des Regelverstärkers RV verbunden, dessen erster Eingang mit der Ausgangsgleichspannung DCO und dessen zweiter Eingang mit einer Sollwertspannung USOLL beaufschlagt ist. Der Ausgang des spannungsgesteuerten Oszillators VCO ist an den S-Eingang des RS-Flip-Flops geführt. Der Stromspannungswandler IUW stellt eine Transformator mit hohem Übersetzungsverhältnis zugunsten seiner Ausgangswicklung AW dar. Mit seiner Stromwicklung SW ist der Stromspannungswandler IUW in Serie zur nicht dargestellten Primärwicklung PW des ebenfalls nicht dargestellten Übertragers Ü geschaltet. Die Ausgangswicklung AW des Stromspannungswandlers IUW ist mit einem Ende an einen Eingang des Komparators K und mit dem anderen Ende an ein sekundärseitiges Null-Volt-Potential MA angeschlossen. Ein zweiter Eingang des Komparators K ist mit einer Referenzspannung UREF beaufschlagt. Ausgangsseitig ist der Komparator K mit dem R-Eingang des RS-Flip-Flops FF verbunden. Der Ausgang dieses RS-Flip-Flops FF ist der ersten Treiberstufe T1 direkt und der zweiten Treiberstufe T2 über einen Inverter INV zugeführt. Die Ausgänge der Treiberstufen T1, T2 sind über die Steuerwicklung STW1, STW2 eines jeweiligen Ansteuerübertragers AST1, AST2 mit dem sekundärseitigen Null-Volt-Potential MA verbunden.

Der Regelverstärker RV vergleicht die Ausgangsgleichspannung DCO mit der Sollwertspannung USOLL. Sinkt die Ausgangsspannung DCO unter den Sollwert USOLL ab, so stellt sich am Ausgang des Regelverstärkers RV eine differenzabhängige Steuerspannung ein. Je höher diese Steuerspannung ist, desto höherfrequent ist das Ausgangssignal des spannungsgesteuerten Oszillators VCO.

Der Komparator K überwacht mit Hilfe des Stromspannungswandlers IUW den Strom in der Primärwicklung PW des Übertragers Ü. Der Komparator K aktiviert seinen Ausgang immer bei Nulldurchgang des Stromes in der Primärwicklung PW. Über die Treiberstufen T1, T2 und die zugeordneten Ansteuerübertrager AST1, AST2 werden die in FIG 1 dargestellten Schalttransistoren Q1, Q2 angesteuert, die mit der erfindungsgemäßen Regelschaltung gegenphasig betrieben werden, also nie gleichzeitig gesperrt oder durchgeschaltet sind. In Ruhelage weist der Ausgang des RS-Flip-Flops FF einen digitalen L-Pegel auf, weshalb der zweite Schalttransistor Q2 durchgeschaltet ist.

Wie die erfindungsgemäße Regelschaltung im Primärstromkreis des Übertragers die Resonanzbedingung herstellt, sei nun ausgehend vom Ruhezustand der Regelschaltung näher eingegangen. Sinkt die Ausgangsgleichspannung DCO unter den Sollwert USOLL ab, so wird der spannungsgesteuerte Oszillator VCO freigegeben. Mit dem ersten Impuls des spannungsgesteuerten Oszillators VCO wird das RS-Flip-Flop FF gesetzt und über die Treiberstufe T1 und den Ansteuerübertrager AST1 der erste Schalttransistor Q1 durchgeschaltet. Der zweite Schalttransistor Q2 wird gesperrt. Der als Schwingkreis ausgebildete Primärstromkreis des Übertragers Ü ist nun mit der Gleichspannungsquelle DCI verbunden, aus der jetzt Energie zum Laden des Schwingkreises entnommen wird. Ausserdem wird an einen im Sekundärstromkreis des Übertragers Ü befindlichen Verbraucher Energie übertragen. Der Wert des Stromes im Schwingkreis zeigt, sofern der Schwingkreis schwingungsfähig dimensioniert wurde, einen zeitlichen Verlauf in Form einer Sinushalbwelle, an deren Ende der Strom wieder auf Null zurückgeht. Diesen Stromnulldurchgang erkennt der Komparator K und setzt das RS-Flip-Flop FF zurück, worauf der erste Schalttransistor Q1 sperrt und der zweite Schalttransistor Q2 durchschaltet. Somit ist der Schwingkreis von der Gleichspannungsquelle DCI abgetrennt und über den zweiten Schalttransistor Q2 kurzgeschlossen. Dies hat ein Entalden des Schwingkreises zur Folge, bei dem Energie dem Sekundärstromkreis des Übertragers Ü zugeführt wird. Beim Entladen verläuft der Strom im Schwingkreis entgegen der beim Laden des Schwingkreises auftretenden Stromrichtung. Der zeitliche Verlauf erfolgt ebenfalls in Form einer Sinushalbwelle, deren Frequenz mit derjenigen beim Laden des Schwingkreises übereinstimmt. Im Schwingkreis durchläuft der Strom also während des Ladens und Entladens eine volle Sinuswelle, deren Frequenz von der sekundärseitigen Belastung des Übertragers Ü abhängt.

Der Vorgang des Ladens und Entladens des Schwingkreises wiederholt sich abhängig davon, mit welcher Frequenz der spannungsgesteuerte Oszillator VCO arbeitet bzw. wie weit die Ausgangsgleichspannung DCO unterhalb der Sollspannung USOLL liegt.

Die erfindungsgemäße Regelschaltung steuert somit die Schalttransistoren Q1, Q2 genau mit der Frequenz an, die der Schwingkreis als seine Eigenfrequenz festlegt. Ändert sich die Eigenfrequenz des Schwingkreises durch einen Lastwechsel im Sekundärstromkreis des Übertragers Ü, so ändert sich mit ihr in oben beschriebener Weise die Ansteuerfrequenz. Die Resonanzbedingung im Schwingkreis bleibt deshalb bei jeder Belastung des Sekundärstromkreises erfüllt.

FIG 3 zeigt einen Schaltplan für eine Netzteilleistungsstufe nach dem Resonanzwandlerprinzip, die für eine Ansteuerung durch die erfindungsgemäße Regelschaltung ausgelegt ist. Verglichen mit der in FIG 1 dargestellten Schaltung einer Leistungsstufe zeigt die FIG 3 nun den als Schwingkreis ausgebildeten Primärstromkreis eines Übertragers Ü, der keine Drossel L und keine Schutzdioden D1, D2 für die Schalttransistoren Q1, Q2 aufweist. Der Eingang EPW der Primärwicklung PW des Übertragers Ü ist über die Source-Drain-Strecke des ersten, als MOS-Fet ausgebildeten Schalttransistors Q1 an eine in Durchlaßrichtung geschaltete und mit dem postiven Pol P1 der Gleichspannungsquelle DCI verbundene Kompensationsdiode KD1 angeschlossen. Zudem ist der Eingang EPW der Primärwicklung PW des Übertragers Ü über eine in Sperrichtung geschaltete Ersatzdiode ED1 mit dem positiven Pol P1 der Gleichspannungsquelle DCI verbunden. Der erste Ansteuerübertrager AST1 verbindet mit seiner Treiberwicklung TRW1 den Steuereingang S1 des ersten Schalttransistors Q1 mit dessen Sourceeingang.

Der Eingang EPW der Primärwicklung PW des Übertragers Ü ist weiterhin über eine zweite auch in Durchlaßrichtung gepolte Kompensationsdiode KD2 und der Drain-Sourcestrecke des zweiten, ebenfalls als MOS-Fet ausgebildeten Schalttransistors Q2 mit dem negativen Pol P2 der Gleichspannungsquelle DCI verbunden. Die Beschaltung für eine zweite Ersatzdiode ED2 und den zweiten Ansteuerübertrager AST2 ist entsprechend der am ersten Schalttransistor Q1. Der Ausgang APW der Primärwicklung PW des Übertragers Ü ist über den Kondensator C und die Stromwicklung SW des Stromspannungswandlers IUW ebenfalls an den negativen Pol P2 der Gleichspannungsquelle DCI angeschlossen.

Die Stromwicklung SW des Stromspannungswandlers IUW weist eine zu vernachlässigende Induktivität auf, weshalb der Schwingkreis nur aus der Induktivität des Übertragers Ü und dem Kondensator C gebildet ist. Die Beschaltung der Schalttransistoren Q1, Q2 mit Kompensations- und Ersatzdioden KD1, KD2, ED1, ED2 ist für hohe Frequenzen deshalb erforderlich, weil die in einem MOS-Fet integrierte antiparallele Diode relativ langsam ist und bei hohen Frequenzen unwirksam wird. Mit den Kompensationsdioden KD1, KD2 werden jeweils diese integrierten antiparallelen Dioden ausgeschaltet und durch die jeweiligen sehr schnellen Ersatzdioden ED1, ED2 ersetzt.

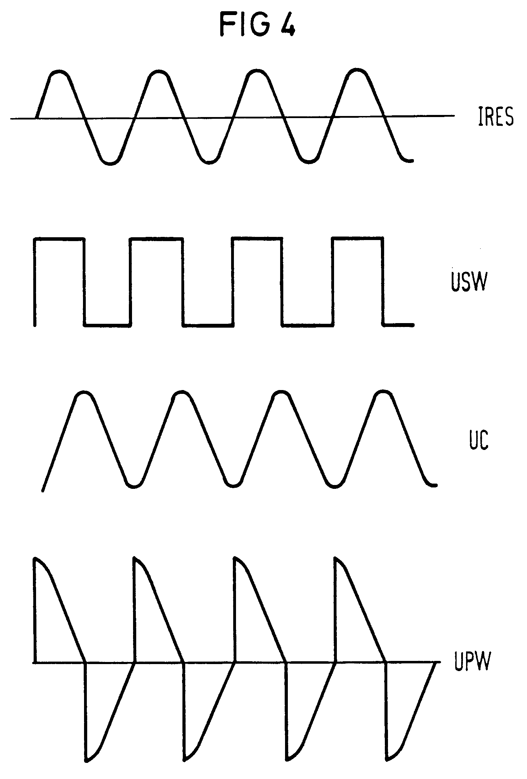

In FIG 4 sind zum besseren Verständnis der Strom- und Spannungsverhältnisse im Schwingkreis der zeitliche Verlauf IRES des Resonanzstroms und die zeitlichen Verläufe USW, UC, UPW der Gesamtspannung am Schwingkreis, der Spannungen über dem Kondensator C und über der Primärwicklung PW des Übertragers Ü für den Fall einer sekundärseitigen Maximalbelastung dargestellt. Die rechteckförmige Gesamtspannung USW am Schwingkreis liegt in Phase mit dem sinusförmigen Resonanzstrom IRES. Das Laden des Schwingkreises ist an einer positiven, und das Entladen des Schwingkreises an einer negativen Sinushalbwelle des Resonanzstromes IRES zu erkennen. Die Spannung UC über dem Kondensator C verläuft ebenfalls sinusförmig und erreicht ihr Maximum jeweils zwischen dem Laden und Entladen des Schwingkreises und geht jeweils am Ende des Entladens auf Null zurück. Die Spannung UPW über der Primärwicklung PW des Übertragers Ü springt zu Beginn des Ladens auf ihren maximalen positiven Wert, nimmt sinusförmig ab, und springt zu Beginn des Entladens auf ihren maximalen negativen Wert, von dem sie wiederum sinusförmig auf ihren Nullwert ansteigt, den sie am Ende des Ladens einnimmt.

Auf eine erfindungsgemäße Regelschaltung mit Erkennung des maximalen Stromes im Primärstromkreis des Übertragers Ü sei im folgenden näher eingegangen.

Mit dem Ziel, einen optimalen Wirkungsgrad des Netzteils herzustellen, muß im Schwingkreis die Resonanzbedingung erfüllt sein. Erfindungsgemäß muß, um die Resonanzbedingung zu erfüllen, die Ansteuerfrequenz der Eigenfrequenz des Schwingkreises nachgeführt werden. Nach der Schwingkreistheorie erreicht der Strom in einem unverändert belassenen Schwingkreis sein Maximum genau dann, wenn der Schwingkreis mit seiner Eigenfrequenz angesteuert wird, d.h. wenn Resonanz auftritt. Weiß man also, daß bei gleichbleibender sekundärseitiger Belastung der Strom im Schwingkreis nicht weiter erhöht werden kann, so ist sicher, daß die Ansteuerfrequenz mit der Eigenfrequenz des Schwingkreises übereinstimmt. Es genügt, zeitliche Mittelwerte des Stromes zu messen und über eine Regelschaltung die Ansteuerfrequenz entsprechend zu verändern.

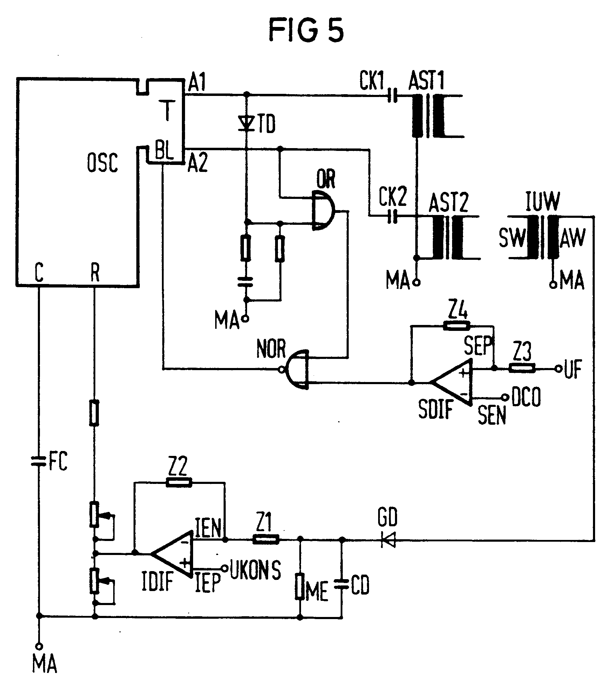

Eine Regelschaltung, die nach diesem Verfahren ihre Ansteuerfrequenz der Eigenfrequenz nachführt, ist in FIG 5 anhand eines Schaltbildes dargestellt und in Zusammenhang mit der Leistungsstufe nach FIG 3 zu sehen.

Einem variablen Oszillator OSC sind eingangsseitig jeweils ein den Strom im Schwingkreis und die Ausgangsgleichspannung DCO des Netzteils überwachender Regelungskomplex zugeordnet. Ausgangsseitig steht der variable Oszillator OSC mit den beiden Ansteuerübertragern AST1, AST2 in Verbindung.

Der variable Oszillator OSC ist für eine externe Beschaltung eines, seine Schwingfrequenz festlegenden RC-Gliedes vorgesehen. Mit seinem C-Eingang ist der variable Oszillator OSC über einen Frequenzkondensator FC mit dem sekundärseitigen Null-Volt-Potential MA verbunden. Über insgesamt drei hintereinandergeschaltete Widerstände, von denen die letzten beiden variabel sind, ist der R-Eingang des variablen Oszillators OSC auch mit dem sekundärseitigen Null-Volt-Potential MA verbunden. Der den Strom im Schwingkreis überwachende Regelungskomplex wird im wesentlichen von einem Differenzverstärker IDIF gebildet, dessen positiven Eingang IEP von einer Konstantspannung UKONS beaufschlagt ist und dessen Ausgang zwischen die beiden variablen Wierstände geführt ist.

Der mit seiner Stromwicklung SW in den Schwingkreis eingeschaltete Stromspannungswandler IUW ist mit dem einen Ende seiner Ausgangswicklung AW an das sekundärseitige Null-Volt-Potential MA angeschlossen und mit dem anderen Ende auf den Anodeneingang einer Gleichrichterdiode GD geführt. Der Katondenausgang der Gleichrichterdiode GD ist über eine Parallelschaltung eines Meßwiderstandes ME und eines Speicherkondensators CD an das sekundärseitige Null-Volt-Potential MA angeschlossen. Über einen Vorwiderstand Z1 ist der Katodenausgang der Gleichrichterdiode GD auch auf den negativen Eingang IEN des Differenzverstärkers IDIF geführt. Über einen Rückkopplungswiderstand Z2 ist zudem der Ausgang des Differenzverstärkers IDIF mit seinem negativen Eingang IEN verbunden.

Der Regelungskomplex zur Überwachung der Ausgangsgleichspannung DCO besteht aus einem Komparator SDIF, dessen negativer Eingang SEN von der Ausgangsleichspannung DCO, und desen positiver Eingang SEP über einen Vorwiderstand Z3 von einer Festspannung UF beaufschlagt ist. Ein Rückkoppelungswiderstand Z4 verbindet den positiven Eingang SEP des Komparators SDIF mit dessen Ausgang, der an den ersten Eingang einer NOR-Schlatung NOR geführt ist. Der Ausgang der NOR-Schaltung NOR ist mit einem Sperreingang BL des variablen Oszillators OSC verbunden.

Zwei Ansteuerausgänge A1, A2 des variablen Oszillators OSC sind jeweils über Koppelkondensatoren CK1, CK2 mit zugeordneten Ansteuerübertragern AST1, AST2 der Schalttransistoren Q1, Q2 verbunden. Zudem ist der zweite Ansteuerausgang A2 des variablen Oszillators OSC direkt an den ersten Eingang einer ODER-Schaltung OR angeschlossen und der erste Ansteuerausgang A1 des variablen Oszillators OSC über die Anoden-Katodenstrecke einer Trenndiode TD mit dem zweiten Eingang der ODER-Schaltung OR verbunden. Weiterhin ist der zweite Eingang der ODER-Schaltung OR zum einen über einen Widerstand und zum anderen über eine Reihenschaltung eines Widerstandes und eines Kondensators mit dem sekundärseitigen Null-Volt-Potential MA verbunden.

Wie diese Regelschaltung die Ansteuerfrequenz der Eigenfrequenz des Schwingkreises nachführt, ist der folgenden Funktionsbeschreibung zu entnehmen.

Dem Momentanwert des Stromes im Schwingkreis wird von dem Stromspannungswandler IUW jeweils ein proportionaler Spannungswer zugeordnet. Durch die Gleichrichterdiode GD, den Meßwiderstand ME und den Speicherkondensator CD wird die Ausgangsspannung des Stromspannungswandlers gleichgerichtet und ein positiver, zeitlich gemittelter Spannungswert gebildet. Der Differenzverstärker IDIF vergleicht diesen Spannungswert mit dem Wert der anliegenden Konstantspannung UKONS. Über den Ausgang des Differenzverstärkers IDIF wird auf den Widerstand des frequenzbestimmenden RC-Gliedes des variablen Oszillators OSC eingewirkt. Im eingeschwungenen Zustand stellt sich der Ausgang des Differenzverstärkers IDIF so ein, daß die Frequenz der Ansteuerausgänge des variablen Oszillators OSC, die ja gleich bedeutend mit der Ansteuerfrequenz der Schalttransistoren Q1, Q2 ist, mit der Eigenfrequenz des Schwingkreises übereinstimmt.

Verändert sich nun die Belastung im Sekundärstromkreis des Übertragers Ü, so verändert sich auch die Eigenfrequenz des Schwingkreises und zwar bekanntlich in der Weise, daß bei Lasterhöhung die Eigenfrequenz einen höheren und bei Lastverringerung die Eigenfrequenz einen geringeren Wert annimmt.

Verringert sich die Belastung im Sekundärstromkreis des Übertragers Ü, so wird der Strom im Schwingkreis einen geringeren Wert annehmen. Der Differenzverstärker IDIF wird deshalb an seinem Ausgang einen positiveren Wert einstellen, der wiederum aus der Sicht des variablen Oszillators OSC eine Widerstandsvergrößerung darstellt, weshalb der variable Oszillator OSC daraufhin die Ansteuerfrequenz der Schalttransistoren Q1, Q2 verringert. Der zeitliche Mittelwert des Stromes im Schwingkreis wird sich erhöhen, da die Ansteuerfrequenz sich nun wieder der Eigenfrequenz des Schwingkreises annähert. Der frequenzbestimmende Widerstand des variablen Oszillators OSC wird durch den Differenzverstärker IDIF solange schrittweise weiter vergrössert, bis die Ansteuerfrequenz mit der Eigenfrequenz des Schwingkreises übereinstimmt, d.h. der zeitliche Mittelwert des Stromes im Schwingkreis durch Verringern der Ansteuerfrequenz nicht weiter erhöht werden kann. Der Vorwiderstand Z1 und der Rückkkopplungswiderstand Z2 am Differenzverstärker IDIF dienen dazu, die Regelcharakteristik des Differenzverstärkers IDIF an die dem Schwingkreis eigene Resonanzkennlinie anzupassen.

Für den Fall der Belastungserhöhung im Sekundärstromkreis des Übertragers Ü wird der Differenzverstärker IDIF dem variablen Oszillator OSC eine schrittweise sich verringernden frequenzbestimmenden Widerstand vorgeben, worauf der variable Oszillator OSC seine Ansteuerfrequenz solange erhöhen wird, bis der zeitliche Mittelwert des Stromes im Schwingkreis nicht weiter erhöht werden kann.

Die Regelung der Ausgangsgleichspannung DCO des Netzteils erfolgt über den Komparator SDIF. Überschreitet die Ausgangsgleichspannung DCO den von dem Vor- und Rückkopplungswiderstand Z3, Z4 und der Festspannung UF festgelegten Wert, so nimmt der Ausgang des Komparators SDIF einen digitalen L-Pegel an. Liegen an beiden Eingängen der NOR-Schaltung NOR digitale L-Pegel, so wird der Sperreingang BL des variablen Oszillators OSC mit einem digitalen H-Pegel beaufschlagt, der dann beide Ansteuerausgänge A1, A2 auf einen elektrischen L-Pegel zwingt, bei dem beide Schalttransistoren Q1, Q2 den Sperrzustand einnehmen. Um zu verhindern, daß beide Schalttransistoren Q1 und Q2 in den Sperrzustand gebracht werden, bevor der Schwingkreis durch den Schalttransistor Q2 entladen worden ist, werden die Ansteuerausgänge A1 und A2 des variablen Oszillators OSC über die ODER-Schaltung OR miteinander verknüpft. Daduch ist gewährleistet, daß sich ein digitaler L-Pegel am Ausgang des Komparators SDIF erst dann auswirkt, wenn der Schwingkreis durch den zweiten Schalttransistor Q2 vollständig entladen wurde.

Die Ansteuerung der beiden digitalen Schalttransistoren Q1, Q2 erfolgt hintereinander durch jeweils einen digitalen H-Pegel in Form eines positiven Rechteckimpulses. Um zu erreichen, daß der zweite Schalttransistor Q2 erst dann durchschaltet, wenn der erste Schalttransistor Q1 seinen Sperrzustand eingenommen hat, liegt zwischen beiden Ansteuerimpulsen eine kurze Schaltpause. Dadurch kann es zu einer verfrühten Auswirkung eines am Komparatorausgang anliegenden digitalen L-Pegels führen. Um dies zu verhindern, wird während der Schaltpause zwischen den beiden Ansteuerimpulsen der Ausgang der ODER-Schaltung OR von der am zweiten Eingang der ODER-Schaltung OR befindlichen RC-Kombination auf digitalem H-Pegel gehalten.

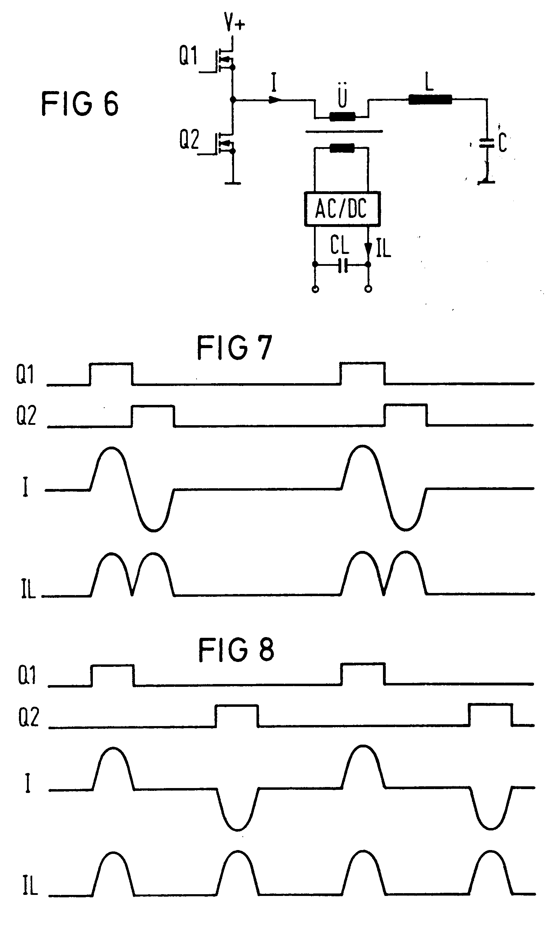

Bei dem vorstehend beschriebenen Regelverfahren wird das Strom-und/oder Spannungsverhalten im Serienschwingkreis des Resonanzwandlers fortlaufend überwacht und die daraus abgeleitete Ansteuerfrequenz kontinuierlich an die sich verändernde Eigenfrequenz angepaßt. Die Resonanzbedingung wird deshalb auch bei sekundärseitigen Belastungsänderungen erfüllt und außerdem werden Wirkungsgradverluste durch Abreißen des Resonanzstroms durch Überspannungen vermieden. Die Grundzüge eines derartigen Regelverfahrens lassen sich in Kürze anhand des in FIg 6 dargestellten Prinzipschaltbilds wie folgt zusammenfassen. Dieses Prinzipschaltbild zeigt im einzelnen die beiden Schalttransistoren Q1, Q2, die in Serie zwischen dem Pluspol +V und dem Minuspol einer Gleichspannungsquelle eingeschaltet sind. Der Verbindungspunkt der beiden Schalttransistoren Q1, Q2 ist mit der Primärwicklung des Übertragers Ü verbunden, die am anderen Ende über eine Serienschaltung, bestehend aus einer Drossel L und einem Kondensator C, nach Masse geführt ist. Der Kondensator C bildet zusammen mit der aus der Drossel L und aus der Primärwicklung des Übertragers Ü zusammengesetzten Induktivität einen Serienschwingkreis. Gegebenenfalls kann die Drossel L entfallen, so daß die Schwingkreisinduktivität ausschließlich aus der Induktivität der Primärwicklung besteht. Der Sekundärkreis des Übertragers Ü besteht aus einer Gleichrichterschaltung AC/DC und aus einem Speicherkondensator CL.

Die Regelung des Schaltnetzteils mit Resonanzwandler erfolgt nun in der Weise, daß, sobald die Ausgangsspannung unter einen vorgegebenen Sollwert sinkt, ein erster Schaltimpuls erzeugt wird, der den ersten Schalttransistor Q1 durchschaltet. Auf diese Weise wird der Serienschwingkreis mit der Gleichspannungsquelle verbunden mit der Folge, daß im Schwingkreis ein Ladevorgang stattfindet. Gleichzeitig wird an den im Sekundärdreis liegenden Speicherkondensator CL Energie übertragen. Anschließend wird der erste Schalttransistor Q1 gesperrt und der zweite Schalttransistor Q2 durchgeschaltet. Auf diese Weise wird ein Entladevorgang ausgelöst, bei dem dem Sekundärkreis des Übertragers Ü ebenfalls Energie zugeführt wird. Beim Entladen verläuft der Strom im Schwingkreis entgegen der beim Laden auftretenden Stromrichtung. Sowohl beim Laden als auch beim Entladen ergibt sich eine Sinushalbwelle, deren Frequenz von der sekundärseitigen Belastung des Übertragers Ü abhängt.

Entsprechend dem in FIG 7 dargestellten Vollwellenprinzip werden die für den Lade- und Entladevorgang zuständigen Schalttransistoren Q1, Q2 unmittelbar nacheinander so geschaltet, daß genau eine Sinusvollwelle entsteht (siehe den Stromverlauf für den Primärstrom I). Dieser Lade- und Entladevorgang wird abhängig vom Vergleich zwischen der Ausgangsspannung und einer vorgegebenen Sollspannung entweder unmittelbar oder nach einer lastabhängigen Pause wiederholt. Mit jeder Vollwelle wird dabei eine bestimmte Ladungsmenge, und zwar in zwei Hälften - pro Halbwelle eine Hälfte - in den im Sekundärstromkreis vorgesehenen Speicherkondensator übernommen (siehe den Verlauf des Stroms IL im Sekundärkreis).

FIG 8 zeigt die jeweiligen Schaltzustände bzw. Stromverläufe bei Anwendung des sogenannten Halbwellenprinzips. Im Unterschied zum Vollwellenprinzip wird hier zunächst nur der Schalttransistor Q1 durchgeschaltet und eine positive Halbwelle erzeugt, an die sich eine lastabhängige Pause anschließt. Abhängig von der im Sekundärkreis auftretenden Ausgangsspannung wird anschließend der Schalttransistor Q2 geschaltet und als Folge des Entladevorgangs eine zweite, diesmal negative Halbwelle erzeugt, an die sich wieder eine Pause anschließt usw..

In den jeweils durch eine Pause voneinander getrennten Halbwellen wird jeweils ca. die Hälfte der Ladungsmenge einer Vollwelle in den Speicherkondensator CL (siehe FIG 1) übertragen. Wegen der halben Ladungsmenge tritt deshalb am Speicherkondensator weniger Ripple-Spannung auf. Außerdem ist die Wiederholfrequenz der Kondensatornachladung doppelt so groß wie beim Vollwellenprinzip. Weitere Vorteile sind ein geringerer Entstöraufwand, eine schnellere Regelung und die Verhinderung hörbarer Frequenzanteile. Wegen der zwischen zwei Halbwellen auftretenden Pausen ist es praktisch ausgeschlossen, daß die beiden Schalttransistoren Q1 und Q2 gleichzeitig leiten, was unweigerlich ihre Zerstörung zur Folge hätte. Da es nun bei den Schalttransistoren, insbesondere beim Schalttransistor Q1, nicht mehr so sehr auf schnelles Ausschalten ankommt, kann die Ansteuerlogik wesentlich vereinfacht werden. Da nach jedem Stromfluß im sekundärseitigen Gleichrichter eine Pause erfolgt, kann darüber hinaus der Sperrverzugszeit des Gleichrichters eher Rechnung getragen werden.

## Patentansprüche

1. Verfahren zur Zustandssteuerung für einen jeweils nacheinander einen Lade- und einen Entladezustand einnehmenden Serienschwingkreis, wobei dieser Schwingkreis mit Hilfe von Schaltmitteln (Q1, Q2) im Ladezustand mit einer Gleichspannungsquelle (DCI) verbunden und im Entladezustand von dieser abgetrennt und geschlossen wird, und der in einem nach dem Prinzip eines Resonanzwandlers ausgebildeten Netzteil den Primärstromkreis eines Übertragers (Ü) bildet, dessen sekundärseitige Ausgangsspannung (DCO) von einer Regeleinrichtung überwacht wird, die den Beginn jedes Ladezustandes in Abhängigkeit der Höhe der sekundärseitigen Ausgangsspannung (DCO) einleitet, **dadurch gekennzeichnet,** daß nach jedem Einleiten des Ladezustandes in Abhängigkeit vom Auftreten von für eine Resonanz im Schwingkreis relevanten, mittels einer Erfassungseinrichtung gemessenen Strom- und/oder Spannungswerten jeweils ein Umschaltimpuls erzeugt wird, der mit Hilfe der Schaltmitteln (Q1, Q2) gezielt den Ladezustand zu einem für eine Erzeugung einer Resonanz im Schwingkreis maßgeblichen Zeitpunkt beendet und dann den Entladezustand einleitet, der wenigstens für die Zeitdauer des Ladezustandes bestehen bleibt.

2. Verfahren nach Anspruch 1, **dadurch gekennzeichnet,** daß der Umschaltimpuls bei Erreichen eines Nullwertes des sich im Schwingkreis einstellenden Stromes erzeugt wird.

3. Verfahren nach Anspruch 1, **dadurch gekennzeichnet,** daß die Zeitdauer eines aktuellen Ladezustandes jeweils für einen darauffolgenden Ladezustand gespeichert wird, daß ein momentaner zeitlich gemittelter Wert des sich im Schwingkreis einstellenden Stromes mit einem jeweils vorhergehenden zeitlich gemittelten Wert verglichen wird, und daß bei erhöhtem bzw. verringertem Wert die Zeitdauer folgender Ladezustände solange verringert bzw. vergrößert wird, bis keine Erhöhung des jeweils verglichenen Wertes feststellbar ist.

4. Verfahren nach Anspruch 1,
**dadurch gekennzeichnet,** daß der Ladevorgang mit einem ersten Schaltimpuls eingeleitet und in Abhängigkeit vom Auftreten von für eine Resonanz im Schwingkreis relevanten Strom- und/oder Spannungswerten beendet wird und daß der Entladevorgang in Abhängigkeit von der Höhe der sekundärseitigen Ausgangsspannung mit einem zweiten Schaltimpuls eingeleitet und wenigstens für die Dauer des Ladevorgangs bestehen bleibt.

5. Schaltungsanordnung zur Durchführung des Verfahrens nach Anspruch 2, mit einem Übertrager (Ü), in dessen Primarstromkreis zur Bildung des Serienschwingkreises ein Kondensator (C), und den Primärstromkreis im Ladezustand über und im Entladezustand unter Umgehung einer Gleichspannungsquelle (DCI) schließende Schaltmittel (Q1, Q2) angeordnet sind, **dadurch gekennzeichnet,** daß eine bistabile Kippstufe eingangsseitig mit einem Ausgang eines dem Primärstromkreis zugeordneten Stromnullwertgebers und mit einem Ausgang eines von einer sekundärseitigen Ausgangsspannung (DCO) des Übertragers (Ü) abhängigen Frequenzgenerators verbunden ist und daß der Ausgang der bistabilen Kippstufe über Koppelglieder an die Schaltmittel angeschlossen ist.

6. Schaltungsanordnung nach Anspruch 5, **dadurch gekennzeichnet,** daß der Stromnullwertgeber aus einem mit seiner Stromwicklung (SW) in den Primärstromkreis eingeschalteten Stromspannungswandler (IUW) besteht, der mit seiner Ausgangswicklung (AW) an einen ersten Eingang eines Komparators (K) angeschlossen ist, dessen zweiter Eingang mit einer Referenzspannung (UREF) beaufschlagt ist.

7. Schaltungsanordnung nach Anspruch 5 oder 6, **dadurch gekennzeichnet,** daß der Frequenzgenerator ein spannungsabhängiger Oszillator (VCO) ist, dessen Eingang mit dem Ausgang eines eingangsseitig von der sekundärseitigen Ausgangsspannung (DCO) und einer Sollwertspannung (USOLL) beaufschlagten Differenzverstärkers (RV) verbunden ist.

8. Schaltungsanordnung nach einem der Ansprüche 5 bis 7, **dadurch gekennzeichnet,** daß die Schaltmittel von zwei Schalttransistoren (Q1,Q2) gebildet sind, daß die Koppelglieder aus jeweils einer einem Schalttransistor (Q1, Q2) zugeordneten Treiberstufe (T1, T2) mit nachgeschaltetem Ansteuerübertrager (AST1,AST2) bestehen, deren Treiberwicklungen (STW1,STW2) mit einem Steuereingang (S1,S2) des zugeordneten Schalttransistors (Q1,Q2) verbunden sind und daß einem der Treiberstufen (T1,T2) eingangsseitig ein Inverter (INV) vorgeschaltet ist.

9. Schaltungsanordnung zur Durchführung des Verfahrens nach Anspruch 3, mit einem Übertrager (Ü), in dessen Primarstromkreis zur Bildung des Serienschwingkreises ein Kondensator (C), und den Primärstromkreis im Ladezustand über und im Entladezustand unter Umgehung einer Gleichspannungsquelle (DCI) schließende Schaltmittel (Q1, Q2) angeordnet sind, **dadurch gekennzeichnet,** daß ein Frequenzgenerator (OSC) an einem zur Veränderung seiner Ausgangsfrequenz vorgesehenen Eingang (R) von einer Regelausgangsspannung einer, zeitlich gemittelte Werte des Stromes im Primärstromkreis vergleichende Regelungsanordnung beaufschlagt ist, daß der Frequenzgenerator (OSC) ausgangsseitig über eine Torschaltung (T) mit an die Schaltmittel (Q1, Q2) angeschlossenen Koppelelementen (CK1, CK2) verbunden ist und daß die Torschaltung (T) einen Sperreingang (BL) aufweist, mit dem ein Ausgang einer eine sekundärseitige Ausgangsspannung (DCO) des Übertragers (Ü) mit einer Festwertspannung (UF) vergleichende Steuereinrichtung verbunden ist.

10. Schaltungsanordnung nach Anspruch 9, **dadurch gekennzeichnet,** daß die Regelungsanordnung aus einem mit seiner Stromwicklung (SW) in den Primärstromkreis eingeschalteten Stromspannungswandlers (IUW) besteht, der mit seiner Ausgangswicklung (AW) über eine Gleichrichteranordnung an einen ersten Eingang eines zur Regelung ausgebildeten Differenzverstärkers (IDIF) angeschlossen ist, dessen zweiter Eingang von einer Konstantspannung (UKONS) beaufschlagt ist.

11. Schaltungsanordnung nach Anspruch 9 oder 10, **dadurch gekennzeichnet,** daß der Frequenzgenerator als variabler Oszillator (OSC) mit über einen Sperreingang (BL) abschaltbaren Ansteuerausgängen (A1,A2) ausgebildet ist, daß die Schaltmittel von zwei Schalttransistoren (Q1, Q2) gebildet sind, daß die Koppelelemente aus jeweils einem, einem Schalttransistor (Q1,Q2) zugeordnetem Koppelkondensator (CK1,CK2) mit nachgeschaltetem Ansteuerübertrager (AST1,AST2) bestehen, deren Treiberwicklungen (STW1,STW2) mit einem Steuereingang (S1,S2) des zugeordneten Schalttransistors (Q1,Q2) verbunden sind.

12. Schaltungsanordnung nach Anspruch 9 bis 11, **dadurch gekennzeichnet,** daß dem Sperreingang eine Verknüpfungsanordnung vorgeschaltet ist, an deren Eingänge der Ausgang der Steuerschaltung und die Ansteuerausgänge (A1,A2) des variablen Oszillators angeschlossen sind.

13. Schaltungsanordnung nach einem der Ansprüche 5 bis 12 **dadurch gekennzeichnet,** daß der Übertrager (Ü) als einzige Induktivität im Primärstromkreis vorgesehen ist.

## Claims

1. Method for state control for a series tuned circuit which in each case successively assumes a charging state and a discharging state, this tuned circuit being connected, with the aid of switching means (Q1, Q2), in the charging state to a DC voltage source (DCI) and being isolated and closed off therefrom in the discharging state and which, in a power supply section which is constructed in accordance with the principle of a resonant converter forms the primary circuit of a transformer (Ü) whose secondary output voltage (DCO) is monitored by a regulating device which initiates the start of each charging state as a function of the magnitude of the secondary output voltage (DCO), characterized in that, whenever the charging state has been initiated, in each case one changeover pulse is produced as a function of the occurrence of current and/or voltage values which are relevant for resonance in the tuned circuit and are measured by means of a detection device, which changeover pulse objectively terminates the charging state, with the aid of the switching means (Q1, Q2), at a point in time which governs production of resonance in the tuned circuit, and then initiates the discharging state which lasts at least for the time duration of the charging state.

2. Method according to Claim 1, characterized in that the changeover pulse is produced when the current which is set in the tuned circuit reaches zero.

3. Method according to Claim 1, characterized in that the time duration of an ongoing charging state is in each case stored for a subsequent charging state, in that an instantaneous value, which is averaged with respect to time, of the current which is set in the tuned circuit is compared with a value which in each case precedes it and is averaged with respect to time, and in that, in the event of the value being higher or lower, the time duration of subsequent charging states is reduced or increased until no increase in the respectively compared value can be found.

4. Method according to Claim 1, characterized in that the charging process is initiated by a first switching pulse and is ended as a function of the occurrence of current and/or voltage values which are relevant for resonance in the tuned circuit, and in that the discharging process is initiated by a second switching pulse, as a function of the magnitude of the secondary output voltage, and lasts for at least the duration of the charging process.

5. Circuit arrangement for carrying out the method according to Claim 2, having a transformer (Ü) in whose primary circuit a capacitor (c) is arranged in order to form the series tuned circuit, and switching means (Q1, Q2) are arranged, which close the primary circuit via a DC voltage source (DCI) in the charging state and bypassing said DC voltage source (DCI) in the discharging state, characterized in that a bistable Flip-Flop is connected on the input side to one output of a current zero sensor which is allocated to the primary circuit and to one output of a frequency generator which is dependent on a secondary output voltage (DCO) of the transformer (Ü), and in that the output of the bistable Flip-Flop is connected to the switching means via coupling elements.

6. Circuit arrangement according to Claim 5, characterized in that the current zero sensor comprises a current/voltage converter (IUW) whose current winding (SW) is connected in the primary circuit and whose output winding (AW) is connected to a first input of a comparator (K) to whose second input a reference voltage (UREF) is applied.

7. Circuit arrangement according to Claim 5 or 6, characterized in that the frequency generator is a voltage-controlled oscillator (VCO) whose input is connected to the output of a differential amplifier (RV) to whose input the secondary output voltage (DCO) and a required-value voltage (USOLL) are applied.

8. Circuit arrangement according to one of Claims 5 to 7, characterized in that the switching means are formed by two switching transistors (Q1, Q2), in that the coupling elements each comprise a driver stage (T1, T2), which is allocated to a switching transistor (Q1, Q2) and has a downstream-connected drive transformer (AST1, AST2) whose driver windings (STW1, STW2) are connected to a control input (S1, S2) of the associated switching transistor (Q1, Q2), and in that an invertor (INV) is connected on the input side upstream of one of the driver stages (T1, T2).

9. Circuit arrangement for carrying out the method according to Claim 3, having a transformer (Ü) in whose primary circuit a capacitor (c) is arranged in order to form the series tuned circuit, and switching means (Q1, Q2) are arranged, which close the primary circuit via a DC voltage source (DCI) in the charging state and bypassing said DC voltage source (DCI) in the discharging state, characterized in that a frequency generator (OSC) has applied to it, at an input (R) which is provided for varying its output frequency, a regulating output voltage of a regulating arrangement which compares values, which are averaged with respect to time, of the current in the primary circuit, in that the frequency generator (OSC) is connected on the output side via a gate circuit (T) to coupling elements (CK1, CK2) which are connected to the switching means (Q1, Q2), and in that the gate circuit (T) has a blocking input (BL) to which one output of a control device is connected which compares a secondary output voltage (DCO) of the transformer (Ü) with a fixed voltage value (UF).

10. Circuit arrangement according to Claim 9, characterized in that the regulating arrangement comprises a current/voltage converter (IUW) whose current winding (SW) is connected in the primary circuit and whose output winding (AW) is connected via a rectifier arrangement to a first input of a differential amplifier (IDIF) which is constructed for regulation and to whose second input a constant voltage (UKONS) is applied.

11. Circuit arrangement according to Claim 9 or 10, characterized in that the frequency generator is constructed as a variable oscillator (OSC) having drive outputs (A1, A2) which can be switched off via a blocking input (BL), in that the switching means are formed by two switching transistors (Q1, Q2), in that the coupling elements in each case comprise a coupling capacitor (CK1, CK2) which is allocated to a switching transistor (Q1, Q2) and has a downstream-connected drive transformer (AST1, AST2) whose driver windings (STW1, STW2) are connected to a control input (S1, S2) of the associated switching transistor (Q1, Q2).

12. Circuit arrangement according to Claim 9 to 11, characterized in that a linking arrangement is connected upstream of the blocking input, to the inputs of which linking arrangement the output of the control circuit and the drive outputs (A1, A2) of the variable oscillator are connected.

13. Circuit arrangement according to one of Claims 5 to 12, characterized in that the transformer (Ü) is provided as the only inductance in the primary circuit.

## Revendications

1. Procédé pour commander l'état d'un circuit oscillant série, qui assume successivement un état de charge et un état de décharge, selon lequel ce circuit oscillant est raccordé, dans l'état de charge, à l'aide de moyens de commutation (Q1,Q2), à une source de tension continue (DCI) et, dans l'état de décharge, est séparé de cette source et est fermé, et la partie du réseau, réalisée selon le principe du transducteur à résonance, forme le circuit primaire d'un transformateur (Ü), dont la tension de sortie (17) sur le côté secondaire est contrôlée par un dispositif de régulation, qui déclenche le début de chaque état de charge en fonction de l'amplitude de la tension de sortie (DCO) présente côté secondaire, caractérisé par le fait qu'après chaque déclenchement de l'état de charge en fonction de l'apparition de valeurs de courant et/ou de tension importantes pour une résonance dans le circuit oscillant et mesurées au moyen d'un dispositif de détection, respectivement une impulsion de commutation est produite, qui, à l'aide des moyens de commutation (Q1, Q2), interrompt, de façon intentionnelle, l'état de charge à un instant qui est déterminant pour la production d'une résonance dans le circuit oscillant, puis déclenche l'état de décharge, qui subsiste au moins pendant la durée de l'état de charge.

2. Procédé suivant la revendication 1, caractérisé par le fait que l'impulsion de commutation est produite lorsqu'une valeur nulle du courant, qui s'établit dans le circuit oscillant, est atteinte.

3. Procédé suivant la revendication 1, caractérisé par le fait que la durée d'un état de charge actuel est mémorisée respectivement pour un état de charge suivant, qu'une valeur instantanée moyenne dans le temps du courant, qui s'établit dans le circuit oscillant, est comparée à une valeur moyenne dans le temps, précédente, et que dans le cas d'une valeur accrue ou réduite, la durée d'états de charge suivants est réduite ou accrue jusqu'à ce qu'on ne puisse déterminer aucun accroissement de la valeur comparée.

4. Procédé suivant la revendication 1, caractérisé par le fait que le processus de charge est déclenché avec une première impulsion de commutation et est interrompu en fonction de l'apparition de valeurs de courant et/ou de tension importantes pour une résonance dans le circuit oscillant, et que le processus de décharge est déclenché en fonction de l'amplitude de la tension de sortie côté secondaire, au moyen d'une seconde impulsion de commutation, et subsiste au moins pendant la durée du processus de charge.

5. Montage pour la mise en oeuvre du procédé suivant la revendication 2, comportant un transformateur (Ü), dans le circuit primaire duquel sont branchés, pour la formation d'un circuit oscillant série, un condensateur (C) et des moyens de commutation (Q1,Q2), qui ferment le circuit primaire par l'intermédiaire d'une source de tension continue (DCI), dans l'état de charge, et moyennant un contournement de la source de tension continue (DCI), dans l'état de décharge, caractérisé par le fait qu'un étage à bascule bistable est raccordé, côté entrée, à une sortie d'un générateur de valeur nulle du courant, associé au circuit primaire, et à une sortie d'un générateur de fréquence, dont le fonctionnement dépend d'une tension de sortie (DCO) présente sur le côté secondaire du transformateur (Ü) et que la sortie de l'étage à bascule bistable est raccordée aux moyens de commutation par l'intermédiaire de circuits de couplage.

6. Montage suivant la revendication 5, caractérisé par le fait que le générateur de valeur nulle du courant est constitué par un transducteur courant-tension (IUW), dont l'enroulement de courant (SW) est branché dans le circuit primaire et qui est raccordé, par son enroulement de sortie (AW), à une première entrée d'un comparateur (K), dont la seconde entrée est chargée par une tension de référence (UREF).

7. Montage suivant la revendication 5 ou 6, caractérisé par le fait que le générateur de fréquence est un oscillateur (VCO), dont le fonctionnement dépend de la tension et dont l'entrée est raccordée à la sortie d'un amplificateur différentiel (RV), qui est chargé côté entrée par la tension de sortie (DCO) présente sur le côté secondaire, et par une valeur de tension de consigne (USOLL).

8. Montage suivant l'une des revendications 5 à 7, caractérisé par le fait que les moyens de commutation sont formés par deux transistors de commutation (Q1, Q2), que les circuits de couplage sont constitués chacun par un étage d'attaque (T1,T2), qui est associé à un transistor de commutation (Q1,Q2) et en aval duquel est branché un transformateur de commande (AST1, AST2), dont les enroulements de commande (STW1, STW2) sont connectés à une entrée de commande (S1,S2) du transistor de commutation associé (Q1,Q2), et qu'un inverseur (INV) est branché en amont des étages d'attaque (T1,T2), côté entrée.

9. Montage pour la mise en oeuvre du procédé suivant la revendication 2, comportant un transformateur (Ü), dans le circuit primaire duquel sont branchés, pour la formation d'un circuit oscillant série, un condensateur (C) et des moyens de commutation (Q1,Q2), qui ferment le circuit primaire, par l'intermédiaire d'une source de tension continue (DCI), dans l'état de charge, et moyennant un contournement de la source de tension continue (DCI), dans l'état de décharge, caractérisé par le fait qu'un générateur de fréquence (OSC) raccordé à une entrée (A) prévue, servant à modifier la fréquence de sortie du générateur de fréquence, est chargé par une tension de sortie de régulation d'un dispositif de régulation qui compare des valeurs moyennes dans le temps du courant dans le circuit primaire, que le générateur de fréquence (ESC) est connecté, côté sortie, par l'intermédiaire d'un circuit de porte (T), à des éléments de couplage (CK1, CK2), qui sont raccordés aux moyens de commutation (Q1, Q2), et que le circuit de porte (T) possède une entrée de blocage (B1), à laquelle est connectée une sortie d'un dispositif de commande qui compare la tension de sortie (DCO) présente sur le côté secondaire du transformateur (Ü) à une tension fixe (UF).

10. Montage suivant la revendication 9, caractérisé par le fait que le dispositif de régulation est constitué par un transducteur courant-tension, dont l'enroulement de courant (SW) est branché dans le circuit primaire et dont l'enroulement de sortie (SW) est raccordé, par l'intermédiaire d'un dispositif redresseur, à une première entrée d'un amplificateur différentiel (IDIF), agencé pour réaliser la régulation et dont la seconde entrée est chargée par une tension constante (UKONS).

11. Montage suivant la revendication 9 ou 10, caractérisé par le fait que le générateur de fréquence est agencé sous la forme d'un oscillateur variable (OSC) qui comporte des sorties de commande (A1,A2), qui peuvent être débranchées par l'intermédiaire d'une entrée de blocage (EL), que des moyens de commutation sont formés par deux transistors de commutation (Q1, Q2), que les éléments de couplage sont constitués respectivement par des condensateurs de couplage (CK1, CK2), associés à des transistors de commutation (Q1, Q2) et en aval desquels sont branchés des transformateurs de commande (AST1, AST2), dont les enroulements d'attaque (STW1, STW2) sont connectés à une entrée de commande (S1, S2) des transistors de commutation associés (Q1, Q2).

12. Montage suivant les revendications 9 à 11, caractérisé par le fait qu'en amont de l'entrée de blocage est branché un dispositif combinatoire, aux entrées duquel sont raccordés la sortie du circuit de commande et les sorties de commande (A1, A2) de l'oscillateur variable.

13. Montage suivant l'une des revendications 5 à 12, caractérisé par le fait que le transformateur (Ü) est prévu sous la forme d'une inductance unique dans le circuit primaire.
